# EUROPEAN PATENT APPLICATION

(11) **EP 4 207 437 A1**
(43) Date of publication of application: **05.07.2023**
(21) Application number: 21921875.7
(22) Date of filing: 29.01.2021
(51) Int. Cl.: H01M 50/10, H01M 10/04

(54) **ELECTROCHEMICAL APPARATUS AND ELECTRONIC DEVICE**

(71) Applicant: Ningde Amperex Technology Limited, Ningde, Fujian 352100 (CN)
(72) Inventor: CHEN, Tengteng, Ningde, Fujian 352100 (CN); DONG, Hui, Ningde, Fujian 352100 (CN); ZHU, Daozheng, Ningde, Fujian 352100 (CN)
(74) Representative: Icosa
(86) International application number: PCT/CN2021/074459
(87) International publication number: WO 2022/160270

(57) **Abstract**

This application relates to an electrochemical apparatus and an electronic device. The electrochemical apparatus includes a housing, an electrode assembly, and an insulation tape, where at least part of the electrode assembly is located inside the housing, and the insulation tape is located between the housing and the electrode assembly. The insulation tape includes a first surface that is bonded to the electrode assembly and a second surface that is bonded to the housing, the first surface includes a first bonding zone, and the second surface includes a second bonding zone, where an area A of the first bonding zone and an area B of the second bonding zone satisfy 0.08≤B/A≤0.965. When the housing of the electrochemical apparatus receives an external force, the external force can be sequentially transferred from the housing to the second bonding zone, the first bonding zone, and the electrode assembly. Because the area of the first bonding zone is larger than the area of the second bonding zone, a peeling force per unit area between the first bonding zone and the electrode assembly can be reduced. This can make the insulation tape smaller and lighter and help increase an energy density of the electrochemical apparatus while ensuring reliability of connection between the insulation tape and the housing.

## Description

### TECHNICAL FIELD

This application relates to the field of energy storage technologies, and in particular, to an electrochemical apparatus and an electronic device.

### BACKGROUND

With the development of electronic devices, batteries for electronic devices are expected to have larger capacities to satisfy battery life requirements of the electronic devices. A battery for electronic devices generally includes a housing and an electrode assembly that is located inside the housing. The housing plays a role of protecting the electrode assembly. The housing and the electrode assembly may be bonded by using an insulation tape. When the electronic device drops, the insulation tape may possibly tear out the electrode assembly, giving rise to a risk of internal short circuit of the electrode assembly. When the insulation tape is not well bonded, a risk of breaking a top cover may arise, which affects safety of the electronic device.

### SUMMARY

This application provides an electrochemical apparatus and an electronic device. The electrochemical apparatus is capable of improving reliability of connection between an electrode assembly and a housing, improving drop resistance, and increasing an energy density of the electrochemical apparatus.

A first aspect of this application provides an electrochemical apparatus. The electrochemical apparatus includes a housing, an electrode assembly, and an insulation tape, where at least part of the electrode assembly is located inside the housing, and the insulation tape is located between the housing and the electrode assembly. The insulation tape includes a first surface that is bonded to the electrode assembly and a second surface that is bonded to the housing, the first surface includes a first bonding zone, and the second surface includes a second bonding zone, where an area A of the first bonding zone and an area B of the second bonding zone satisfy 0.08≤B/A≤0.965. In another possible design, 0.15≤B/A≤0.85.

In a possible design, the first bonding zone has a first outer edge, and the second bonding zone has a second outer edge, where a distance between an orthographic projection of the second outer edge onto the first surface and the first outer edge is h, and a width of the first surface is W2, where 0.035×W2≤h≤0.4×W2. In another possible design, 0.05×W2≤h≤0.35×W2.

In a possible design, the electrode assembly has a third surface that is bonded to the insulation tape, and the first bonding zone covers an orthographic projection of the second bonding zone onto the third surface.

In a possible design, the electrode assembly has a third surface that is bonded to the insulation tape, and a length of the third surface is L1; and along a width direction of the electrochemical apparatus, the first bonding zone has a first axis, the third surface has a second axis, and a distance between an orthographic projection of the first axis onto the third surface and the second axis is D, where D≤0.1×L1.

In a possible design, a width of the third surface is W1, and along a length direction of the electrochemical apparatus, the first bonding zone has a third axis, the third surface has a fourth axis, and a distance between an orthographic projection of the third axis onto the third surface and the fourth axis is E, where E≤0.1×W1.

In a possible design, an orthographic projection of a geometric center of the second bonding zone onto the first surface coincides with a geometric center of the first bonding zone. In a possible design, a ratio of a distance from the geometric center of the first bonding zone to the first outer edge along a direction to a distance from the geometric center of the first bonding zone to the second outer edge along the same direction is the same as a ratio of a distance from the geometric center of the second bonding zone to the first outer edge along the direction to a distance from the geometric center of the second bonding zone to the second outer edge along the same direction.

In a possible design, a length of the first bonding zone is L2 and a width of the first bonding zone is W2, where 0.4×L1≤L2≤0.8×L1 and 0.4×W1≤W2≤0.8×W1.

In a possible design, the insulation tape includes a first adhesive, a substrate, and a second adhesive that are laminated, the first adhesive is bonded to the electrode assembly, and the second adhesive is bonded to the housing.

In a possible design, a shape of the first bonding zone and the second bonding zone is selected from any one of square, rectangle, trapezium, octagon, circle, or oval.

A second aspect of this application provides an electronic device, and the electronic device includes the electrochemical apparatus described above.

When the housing of the electrochemical apparatus receives an external force (for example, the housing receives an external force during a drop test), the external force can be transferred from the housing to the second bonding zone of the insulation tape, from the second bonding zone to the first bonding zone, and from the first bonding zone to the electrode assembly. Because the area of the first bonding zone is larger than the area of the second bonding zone, a peeling force per unit area between the first bonding zone and the electrode assembly can be reduced, thereby reducing a risk of the electrode assembly being torn out by the insulation tape under the external force, improving reliability of connection between the electrode assembly and the insulation tape, and further improving safety of the electrode assembly. In addition, when the second surface of the insulation tape that is connected to the housing has a smaller area, the insulation tape is smaller and lighter while reliability of connection between the insulation tape and the housing is ensured, thereby helping increase an energy density of the electrochemical apparatus.

It should be understood that the foregoing general description and the following detailed description are only exemplary and are not intended to limit this application.

### BRIEF DESCRIPTION OF DRAWINGS

FIG. 1 is a schematic structural diagram of connection between a housing, an electrode assembly, and an insulation tape according to a first embodiment of this application;
FIG. 2 is a schematic structural diagram of connection between a housing, an electrode assembly, and an insulation tape according to a second embodiment of this application;
FIG. 3 is a schematic structural diagram of connection between a housing, an electrode assembly, and an insulation tape according to a third embodiment of this application;
FIG. 4 is schematic structural diagram of a projection of an insulation tape onto a third surface of an electrode assembly according to a fourth embodiment of this application;
FIG. 5 is schematic structural diagram of a projection of an insulation tape onto a third surface of an electrode assembly according to a fifth embodiment of this application;
FIG. 6 is schematic structural diagram of a projection of an insulation tape onto a third surface of an electrode assembly according to a sixth embodiment of this application;
FIG. 7 is a side view of an electrochemical apparatus according to an embodiment of this application; and
FIG. 8 is a schematic structural diagram of an electrochemical apparatus according to an embodiment of this application.

### Reference signs:

1. housing;
2. electrode assembly;
   21. third surface;
   211. second axis;
   212. fourth axis;
3. insulation tape;
   31. first bonding zone;
      311. first outer edge;
      312. first axis;
      313. third axis;
   32. second bonding zone;
      321. second outer edge;
   33. first adhesive;
   34. second adhesive; and
   35. substrate.

The accompanying drawings herein are incorporated into this specification and form a part of this specification, illustrate the embodiments conforming to this application, and are intended to explain the principles of this application together with this specification.

### DETAILED DESCRIPTION OF EMBODIMENTS

To help better understand the technical solutions of this application, the following describes the embodiments of this application in detail with reference to the accompanying drawings.

Apparently, the described embodiments are merely some rather than all of the embodiments of this application. All other embodiments obtained based on the embodiments of this application shall fall within the protection scope of this application.

The terms used in the embodiments of this application are merely intended to describe specific embodiments, but not intended to limit this application. The terms "a/an", "the" and "this" of singular forms used in the embodiments and the appended claims of this application are also intended to include plural forms, unless otherwise specified in the context clearly.

It should be understood that in this specification, the term "and/or" is merely an association relationship that describes associated objects, indicating that three relationships may exist. For example, A and/or B may indicate three cases: only A, both A and B, and only B. In addition, the character "/" in this specification generally indicates that associated objects are in an "or" relationship.

It should be noted that the directional terms such as "upper", "lower", "left", and "right" described in the embodiments of this application are described as seen from the angles shown in the accompanying drawings, and should not be understood as limitations to the embodiments of this application. In addition, in the context, it should be further understood that when an element is referred to as being "above" or "under" another element, the element can not only be directly connected "above" or "under" the another element, but also be indirectly connected "above" or "under" the another element through an intermediate element.

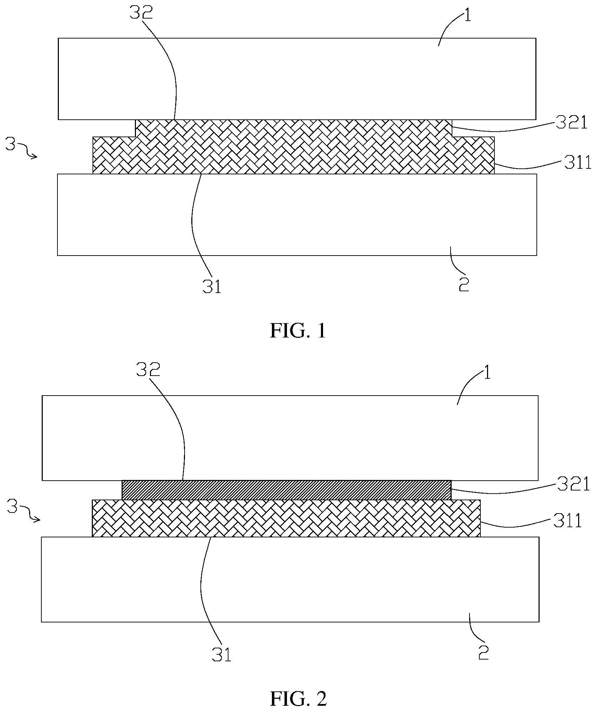

An embodiment of this application provides an electrochemical apparatus. As shown in FIG. 1 to FIG. 3, the electrochemical apparatus includes a housing 1 and an electrode assembly 2. The housing 1 has an accommodation cavity, and at least part of the electrode assembly 2 is located inside the accommodation cavity. The housing 1 is configured to protect the electrode assembly 2. The electrode assembly 2 may include a first electrode plate, a second electrode plate, and a separator. One of the first electrode plate and the second electrode plate is a positive electrode plate, and the other is a negative electrode plate. The separator is configured to separate the first electrode plate from the second electrode plate. The separator is supported by thermoplastic resin, such as polyethylene or polypropylene. The separator is configured to insulate the first electrode plate and the second electrode plate.

When the electrochemical apparatus is in a drop test, risks such as breaking of a top cover and peeling of aluminum foil of the electrode assembly 2 are prone to arise, thereby causing short circuit in the electrode assembly 2 and causing damage to the electrochemical apparatus. To resolve this technical issue, as shown in FIG. 1 to FIG. 3, the electrochemical apparatus further includes an insulation tape 3. The insulation tape 3 is located between the housing 1 and the electrode assembly 2. The insulation tape 3 includes a first surface that is bonded to the electrode assembly 2 and a second surface that is bonded to the housing 1, the first surface includes a first bonding zone 31, and the second surface includes a second bonding zone 32. The electrode assembly 2 is bonded to the housing 1 by using the insulation tape 3, which prevents the electrode assembly 2 from moving inside an accommodation cavity of the housing 1 when the electrochemical apparatus is working. The insulation tape 3 is further capable of preventing short circuit between the electrode assembly 2 and the housing 1, so that the electrochemical apparatus can function properly. A bonding strength of the insulation tape 3 is related to factors such as quality and size of the electrochemical apparatus. Generally, the bonding strength of the insulation tape 3 ranges from 2 MPa to 20 MPa. In addition, during a drop test, there is further a risk of the aluminum foil of the electrode assembly 2 being torn out by the insulation tape 3 under an action of an external force.

In this embodiment, an area of the first bonding zone 31 is larger than an area of the second bonding zone 32, that is, an area of a surface where the insulation tape 3 is bonded to the housing 1 is smaller than an area of a surface where the insulation tape 3 is bonded to the electrode assembly 2.

When the housing 1 of the electrochemical apparatus receives an external force (for example, the housing 1 receives an external force during a drop test), the external force can be transferred from the housing 1 to the second bonding zone 32 of the insulation tape 3, from the second bonding zone 32 to the first bonding zone 31, and from the first bonding zone 31 to the electrode assembly 2. Because the area of the first bonding zone 31 is larger than the area of the second bonding zone 32, a peeling force per unit area between the first bonding zone 31 and the electrode assembly 2 can be reduced, thereby reducing a risk of the aluminum foil of the electrode assembly 2 being torn out by the insulation tape 3, improving reliability of connection between the electrode assembly 2 and the insulation tape 3, and further improving safety of the electrode assembly 2. In addition, when the second bonding zone 32 of the insulation tape 3 that is connected to the housing 1 has a smaller area, the insulation tape 3 is smaller and lighter while reliability of connection between the insulation tape 3 and the housing 1 is ensured, thereby helping increase an energy density of the electrochemical apparatus.

Specifically, the area A of the first bonding zone 31 and the area B of the second bonding zone 32 satisfy 0.08≤B/A≤0.965. In a specific embodiment, 0.1≤B/A≤0.6. For example, B/A may be specifically 0.1, 0.3, 0.4, 0.6, 0.8, 0.9, or the like.

In this embodiment, when B/A is excessively large (for example, greater than 0.965), it indicates that the area A of the first bonding zone 31 is close to the area B of the second bonding zone 32. As a result, a peeling force per unit area between an edge of the first bonding zone 31 and the electrode assembly 2 cannot be effectively reduced, thereby increasing the risk of the aluminum foil of the electrode assembly 2 being torn out by the insulation tape 3, and reducing safety of the electrode assembly 2. In addition, the insulation tape 3 is made excessively heavy and excessively large, and the energy density of the electrochemical apparatus is decreased. When B/A is excessively small (for example, less than 0.08), the area B of the second bonding zone 32 is excessively small, which results in a larger peeling force per unit area between the insulation tape 3 and the housing 1, and reduces the reliability of connection.

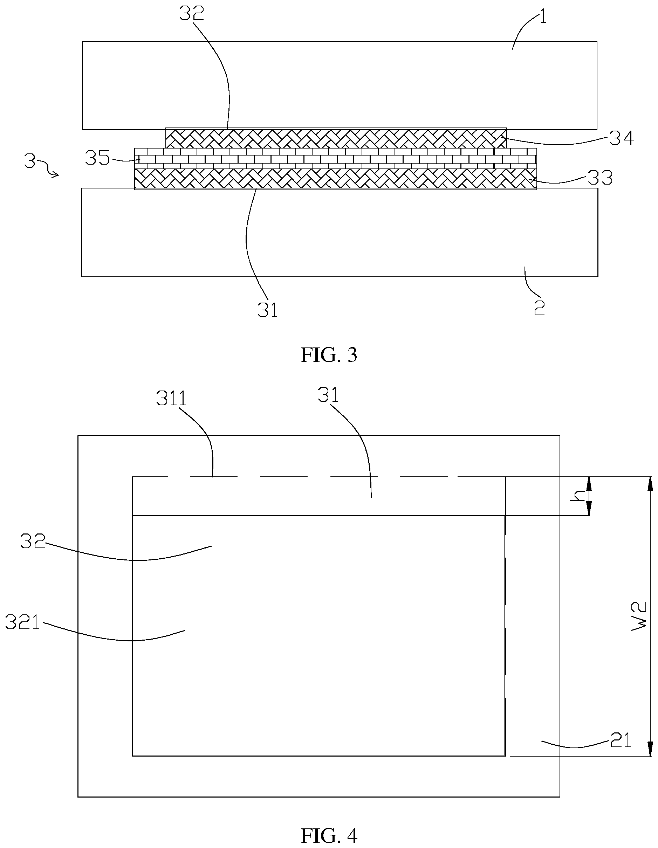

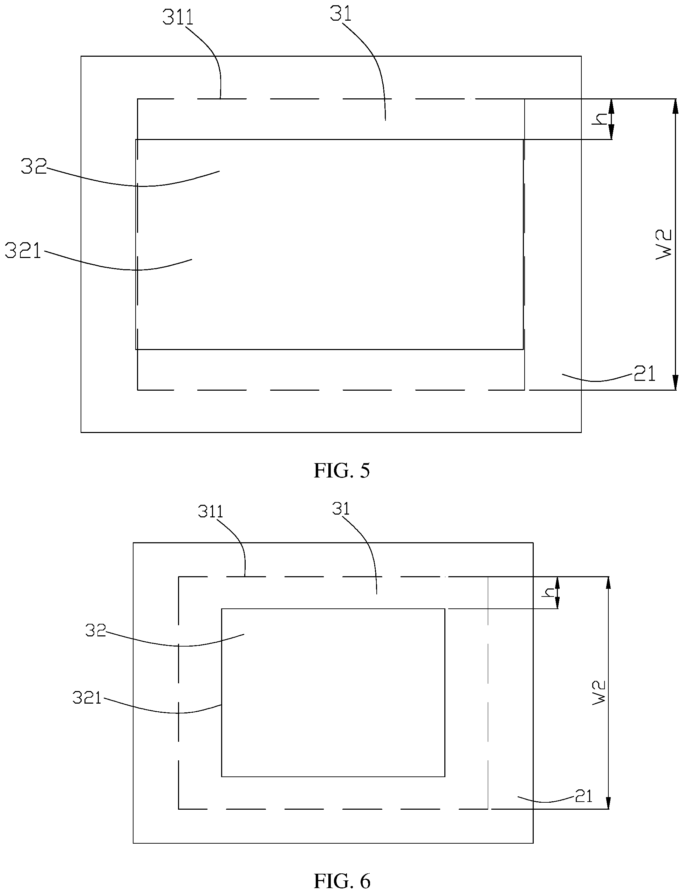

More specifically, as shown in FIG. 1 to FIG. 6, the first bonding zone 31 has a first outer edge 311, and the second bonding zone 32 has a second outer edge 321. More specifically, as shown in FIG. 4 to FIG. 6, a distance between an orthographic projection of the second outer edge 321 onto the first surface and the first outer edge 311 is h, and a width of the first bonding zone 31 is W2, where 0.035×W2≤h≤0.4×W2. In a specific embodiment, 0.05×W2≤h≤0.35×W2. For example, h may be 0.2×W2, 0.3×W2, or the like. That is, the orthographic projection of the second outer edge 321 onto the first surface misaligns with the first outer edge 311. The foregoing misalignment may exist at one of four sides (as shown in FIG. 4), at two opposite sides (as shown in FIG. 5), or at all four sides (as shown in FIG. 6) of the insulation tape 3.

In this embodiment, when h is excessively large, it indicates that a difference between the area of the second bonding zone 32 and the area of the first bonding zone 31 is excessively large, that is, an area of a bonding surface between the insulation tape 3 and the housing 1 is excessively small, which causes an excessively large peeling force per unit area between the insulation tape 3 and the housing 1, thereby causing excessively low reliability of connection between the insulation tape 3 and the housing 1. When h is excessively small, it indicates that the difference between the area of the second bonding zone 32 and the area of the first bonding zone 31 is excessively small, that is, an area of the first bonding zone 31 beyond an edge of the second bonding zone 32 is excessively small, which causes an excessively small action area of stress transferred from the edge of the second bonding zone 32 to an edge of the first bonding zone, that is, an excessively large peeling force per unit area between the edge of the first bonding zone 31 of the insulation tape 3 and the electrode assembly 2, thereby causing the aluminum foil of the electrode assembly 2 to be easily torn out by the insulation tape 3. In addition, this further causes the insulation tape 3 to be excessively large and decreases the energy density of the electrochemical apparatus. Therefore, when 0.035×W2≤h≤0.4×W2, the areas of the first bonding zone 31 and the second bonding zone 32 are appropriate, so that connection between the insulation tape 3 and the housing 1 and connection between the insulation tape 3 and the electrode assembly 2 are both more reliable, and the energy density of the electrochemical apparatus can be increased.

A drop test was performed by using a lithium-ion battery whose maximum projection surface is a rectangle to compare drop pass rates. Group 1 has a structure shown in FIG. 4, where the foregoing misalignment exists at one side along a width direction of the insulation tape 3. Group 2 has a structure shown in FIG. 5, where the foregoing misalignment exists at two sides along the width direction of the insulation tape 3. Group 3 has a structure shown in FIG. 6, where the foregoing misalignment exists at peripheral sides of the insulation tape 3. A first bonding zone 31 and a second bonding zone 32 of a base group have the same shape and size. A quantity of times the test is repeated on the lithium-ion battery at each position is set to 20, and it is considered as qualified if the pass rate is not less than 80% (that is, at least 16 electrochemical apparatuses do not fail when dropped). The drop condition is: group 1 dropped at a single side, group 2 dropped at two opposite sides, and group 3 dropped at six sides and four corners. A length L1 of an electrode assembly 2 of the selected rectangular lithium-ion battery is 87 mm and a width W1 is 64 mm. A length L2 of the first bonding zone 31 is 60 mm and a width W2 is 42 mm. Test results are shown in the following table.

| Group | h (mm) | B/A | Quantity of failed electrochemical apparatuses | Pass rate (%) |
|---|---|---|---|---|
| 1 | 0.035×42 | 0.965 | 3 | 85 |
| | 0.05×42 | 0.95 | 2 | 90 |
| | 0.1×42 | 0.90 | 1 | 95 |
| | 0.15×42 | 0.85 | 0 | 100 |
| | 0.2×42 | 0.80 | 0 | 100 |
| | 0.3×42 | 0.70 | 1 | 95 |
| | 0.35×42 | 0.65 | 2 | 90 |
| | 0.4×42 | 0.60 | 3 | 85 |
| 2 | 0.035×42 | 0.93 | 3 | 85 |
| | 0.05×42 | 0.90 | 1 | 95 |
| | 0.1×42 | 0.80 | 1 | 95 |
| | 0.15×42 | 0.70 | 0 | 100 |
| | 0.2×42 | 0.60 | 0 | 100 |
| | 0.3×42 | 0.40 | 1 | 95 |
| | 0.35×42 | 0.30 | 2 | 90 |
| | 0.4×42 | 0.20 | 3 | 85 |
| 3 | 0.035×42 | 0.884 | 3 | 85 |
| | 0.05×42 | 0.837 | 1 | 95 |
| | 0.1×42 | 0.688 | 0 | 100 |
| | 0.15×42 | 0.553 | 0 | 100 |
| | 0.2×42 | 0.432 | 0 | 100 |
| | 0.3×42 | 0.232 | 0 | 100 |
| | 0.35×42 | 0.153 | 2 | 90 |
| | 0.4×42 | 0.088 | 4 | 80 |
| Base | 0 | 1 | 5 | 75 |

It can be learnt from the test results in the foregoing table that after the insulation tape 3 of this application is provided such that the area A of the first bonding zone and the area B of the second bonding zone satisfy 0.08≤B/A≤0.965, all the electrochemical apparatuses have relatively high pass rates in the drop test, and have higher pass rates (≥90%) when 0.05×W2≤h≤0.35W2.

In a specific embodiment, as shown in FIG. 4 to FIG. 6, an electrode assembly 2 has a third surface 21 that is bonded to an insulation tape 3, that is, the third surface 21 of the electrode assembly 2 is bonded to a first bonding zone 31 of the insulation tape 3, and the first bonding zone 31 covers an orthographic projection of a second bonding zone 32 onto the third surface 21.

In this embodiment, when the first bonding zone 31 covers the orthographic projection of the second bonding zone 32 onto the third surface 21, an external force transferred from the second bonding zone 32 can be fully transferred to the first bonding zone 31 via the insulation tape 3 and thereby transferred to the third surface 21 of the electrode assembly 2. This reduces a risk of breaking of the insulation tape 3 under an action of the external force and improves a structural strength and service life of the insulation tape 3, thereby improving reliability of connection between the housing 1 and the electrode assembly 2.

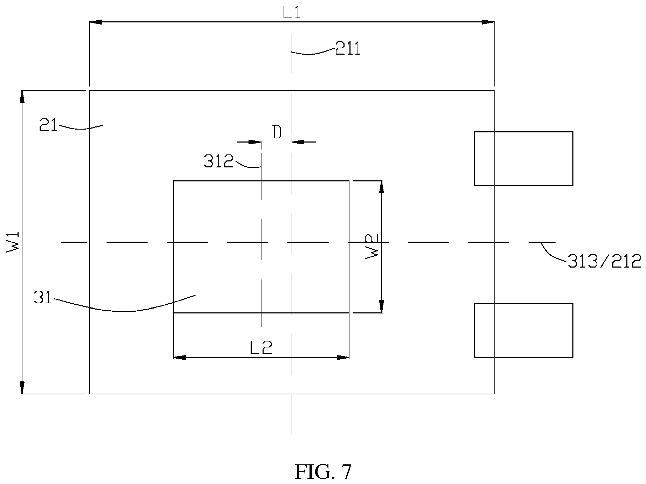

Specifically, as shown in FIG. 7, a length of the third surface 21 of the electrode assembly 2 is L1, and along a width direction of the electrochemical apparatus, the first bonding zone 31 has a first axis 312, the third surface 21 has a second axis 211, and the first axis 312 and the second axis 211 are both axes extending along the width direction of the electrochemical apparatus. In an embodiment shown in FIG. 7, along a length direction of the electrochemical apparatus, the first bonding zone 31 is symmetric to the first axis 312 and the third surface 21 is symmetric to the second axis 211. A distance between an orthographic projection of the first axis 312 onto the third surface 21 and the second axis 211 is D, where D may be specifically 0. Alternatively, based on an actual situation, L and L1 may satisfy D≤0.1×L1. For example, D may be 0.05×L1, 0.06×L1, or the like. In addition, as shown in FIG. 7, along a length direction of the electrochemical apparatus, the first bonding zone 31 of the insulation tape 3 has a third axis 313, the third surface 21 has a fourth axis 212, and the third axis 313 and the fourth axis 212 are both axes extending along the length direction of the electrochemical apparatus. In the embodiment shown in FIG. 7, along the width direction of the electrochemical apparatus, the first bonding zone 31 is symmetric to the third axis 313 and the third surface 21 is symmetric to the fourth axis 212. In this embodiment, a distance between an orthographic projection of the third axis 313 onto the third surface 21 and the fourth axis 212 is E, where E may be specifically 0. Alternatively, based on an actual situation, E and W1 may satisfy E≤0.15×W1.

A distance between D and L1 and a distance between E and W1 can be set as appropriate to the actual situation, as long as reliability of connection between the insulation tape 3 and the electrode assembly 2 can be improved and a risk of breaking them at an edge can be reduced.

In this embodiment, a weight of the electrode assembly 2 at various positions is uneven and the reliability of connection between the insulation tape 3 and the electrode assembly 2 is affected by gravity of the electrode assembly 2. Therefore, when the weight of the electrode assembly 2 is uneven, an impact of the gravity of the electrode assembly 2 on the reliability of connection between the insulation tape 3 and the electrode assembly 2 can be reduced by changing a location of the insulation tape 3 on the third surface 21.

In a possible design, as shown in FIG. 4 to FIG. 7, an orthographic projection of a geometric center of the second bonding zone 32 onto the first surface coincides with a geometric center of the first bonding zone 31. In another possible design, a ratio of a distance from the geometric center of the first bonding zone 31 to a first outer edge 311 along a direction to a distance from the geometric center of the first bonding zone 31 to a second outer edge 321 along the same direction is the same as a ratio of a distance from the geometric center of a second bonding zone 32 to the first outer edge 311 along the direction to a distance from the geometric center of the second bonding zone 32 to the second outer edge 321 along the same direction.

In this embodiment, because the orthographic projection of the geometric center of the second bonding zone 32 onto the first surface coincides with the geometric center of the first bonding zone 31, the geometric center of the second bonding zone 32 is located on a same straight line as the geometric center of the first bonding zone 31. Therefore, after the insulation tape 3 is bonded to the housing 1 and the electrode assembly 2, the first bonding zone 31 and the second bonding zone 32 receives relatively even force, which improves a structural strength of the insulation tape 3. In addition, because the ratio of the distance from the geometric center of the first bonding zone 31 to the first outer edge 311 along a direction to the distance from the geometric center of the first bonding zone 31 to a second outer edge 321 along the same direction is the same as the ratio of the distance from the geometric center of the second bonding zone 32 to the first outer edge 311 along the direction to the distance from the geometric center of the second bonding zone 32 to the second outer edge 321 along the same direction, the orthographic projection of the second bonding zone 32 onto the first surface is located in the middle of the first bonding zone 31. This can further improve evenness of a force transferred from the second bonding zone 32 to the first bonding zone 31 and improve the structural strength of the insulation tape 3 and a strength of bonding between the insulation tape 3 and the electrode assembly 2.

In the foregoing embodiments, as shown in FIG. 7, the electrode assembly 2 has the third surface 21 that is bonded to the insulation tape 3, where a length of the third surface 21 is L1 and a width is W1. A length of the first bonding zone 31 of the insulation tape 3 that is used to be bonded to the electrode assembly 2 is L2 and a width is W2, where 0.4×L1≤L2≤0.8×L1 and 0.4×W1≤W2≤0.8×W1. For example, L2 may be specifically 0.4×L1, 0.5×L1, 0.7×L1, 0.8×L1, or the like, and W2 may be specifically 0.4×W1, 0.6×W1, 0.7×W1, 0.8×W1, or the like.

A relationship between L1 and L2 and that between W1 and W2 are not limited to the foregoing relationships, and can be set as appropriate to the actual situation, as long as the reliability of connection between the insulation tape 3 and the electrode assembly 2 can be improved and the electrode assembly 2 can be prevented from being torn out.

In a first specific embodiment, as shown in FIG. 1, the insulation tape 3 may have an integral structure, and the insulation tape 3 can be formed, in a processing manner such as cutting, to have the first bonding zone 31 and the second bonding zone 32 that have unequal areas. In this embodiment, the integrally structured insulation tape 3 has advantages of simple structure and high strength.

In a second specific embodiment, as shown in FIG. 2, the insulation tape 3 may have a separated structure, that is, the insulation tape 3 includes two tapes and both the two tapes are double-sided adhesive tapes, so that one surface of one of the tapes is used to be bonded to one surface of the other tape, and the other surfaces of the tapes are respectively used to be bonded to the housing 1 and the electrode assembly 2. In this embodiment, the separately structured insulation tape 3 has advantages of simple structure and convenient processing, and can easily implement that the first bonding zone 31 and the second bonding zone 32 of the insulation tape 3 have different bonding forces.

In a third specific embodiment, as shown in FIG. 3, the insulation tape 3 includes a first adhesive 33, a substrate 35, and a second adhesive 34 that are laminated, the substrate 35 is located between the first adhesive 33 and the second adhesive 34 and is connected to both. The first adhesive 33 is used to be bonded to the electrode assembly 2, that is, the first bonding zone 31 is disposed at the first adhesive 33. The second adhesive 34 is used to be bonded to the housing 1, that is, the second bonding zone 32 is disposed at the second adhesive 34.

As shown in FIG. 3, an area of the first adhesive 33 is larger than an area of the second adhesive 34, and a size of the substrate 35 is equal to a size of the first adhesive 33 whose area is larger. The first adhesive 33 may be bonded to the substrate 35, and the second adhesive 34 may also be bonded to the substrate 35.

In this embodiment, the substrate 35 of the insulation tape 3 is capable of playing a role of supporting the first adhesive 33 and the second adhesive 34, thereby improving the structural strength of the insulation tape 3, further reducing a risk of damage to the insulation tape 3 under an action of an external force, and improving reliability of connection between the housing 1 and the electrode assembly 2. In addition, the separately structured insulation tape 3 has advantages of simple structure and convenient processing, and can easily implement that the first bonding zone 31 and the second bonding zone 32 of the insulation tape 3 have different bonding forces.

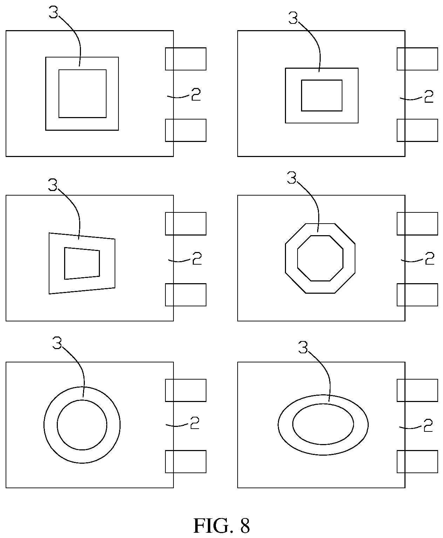

In the foregoing embodiments, as shown in FIG. 8, a shape of a first bonding zone 31 and a second bonding zone 32 in an insulation tape 3 is selected from any one of square, rectangle, trapezium, octagon, circle, or oval.

The electrochemical apparatus in the embodiments of this application can be used in a plurality of fields. Devices can use the electrochemical apparatus in the embodiments of this application as long as the devices can use electrochemical apparatuses for power supply. For example, the electrochemical apparatus may be used for components such as an electrochemical apparatus and an electronic apparatus of an electric vehicle. The electronic apparatus may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an onboard device, a smart home device and/or a smart city device, an electric tool, an energy storage apparatus, an electric tricycle, an electric vehicle, or the like. A specific type of the electronic apparatus is not specially limited in the embodiments of this application.

Specifically, the electronic device may include components such as a housing, a screen, a circuit board, and an electrochemical apparatus, where the screen, circuit board, and electrochemical apparatus are all installed inside the housing, and the electrochemical apparatus is the electrochemical apparatus according to any one of the foregoing embodiments.

The foregoing descriptions are merely preferred embodiments of this application, but are not intended to limit this application. Persons skilled in the art understand that this application may have various modifications and variations. Any modification, equivalent replacement, and improvement made without departing from the spirit and principle of this application shall fall within the protection scope of this application.

## Claims

1. An electrochemical apparatus, **characterized by** comprising:
a housing;
an electrode assembly, wherein at least part of the electrode assembly is located inside the housing; and
an insulation tape, wherein the insulation tape is located between the housing and the electrode assembly, the insulation tape comprises a first surface that is bonded to the electrode assembly and a second surface that is bonded to the housing, the first surface comprises a first bonding zone, and the second surface comprises a second bonding zone;
wherein an area A of the first bonding zone and an area B of the second bonding zone satisfy 0.08≤B/A≤0.965.

2. The electrochemical apparatus according to claim 1, **characterized in that** the first bonding zone has a first outer edge, and the second bonding zone has a second outer edge, wherein
a distance between an orthographic projection of the second outer edge onto the first surface and the first outer edge is h, and a width of the first surface is W2,
wherein 0.035×W2≤h≤0.4×W2.

3. The electrochemical apparatus according to claim 2, **characterized in that** at least one of the following conditions is satisfied:
(a) 0.15≤B/A≤0.85; or
(b) 0.05×W2≤h≤0.35×W2.

4. The electrochemical apparatus according to claim 2, **characterized in that** the electrode assembly has a third surface that is bonded to the insulation tape, and the first bonding zone covers an orthographic projection of the second bonding zone onto the third surface.

5. The electrochemical apparatus according to claim 1, **characterized in that** the electrode assembly has a third surface that is bonded to the insulation tape, and a length of the third surface is L1; and
along a width direction of the electrochemical apparatus, the first bonding zone has a first axis, the third surface has a second axis, and a distance between an orthographic projection of the first axis onto the third surface and the second axis is D, wherein D≤0.1×L1.

6. The electrochemical apparatus according to claim 1, **characterized in that** the electrode assembly has a third surface that is bonded to the insulation tape, and a width of the third surface is W1; and
along a length direction of the electrochemical apparatus, the first bonding zone has a third axis, the third surface has a fourth axis, and a distance between an orthographic projection of the third axis onto the third surface and the fourth axis is E, wherein E≤0.1×W1.

7. The electrochemical apparatus according to claim 2, **characterized in that** an orthographic projection of a geometric center of the second bonding zone onto the first surface coincides with a geometric center of the first bonding zone.

8. The electrochemical apparatus according to claim 1, **characterized in that** the insulation tape comprises a first adhesive, a substrate, and a second adhesive that are laminated, the first adhesive is bonded to the electrode assembly, and the second adhesive is bonded to the housing.

9. The electrochemical apparatus according to claim 1, **characterized in that** a shape of the first bonding zone and the second bonding zone is selected from any one of square, rectangle, trapezium, octagon, circle, or oval.

10. An electronic device, **characterized in that** the electronic device comprises the electrochemical apparatus according to any one of claims 1 to 9.
